(19) Europäisches Patentamt
European Patent Office
Office européen des brevets

(11) **EP 4 622 245 A1**

(12) **EUROPEAN PATENT APPLICATION**

(43) Date of publication:
**24.09.2025 Bulletin 2025/39**

(21) Application number: **25156309.4**

(22) Date of filing: **06.02.2025**

(51) International Patent Classification (IPC):
**H04N 1/62** *(2006.01)* **G06T 7/90** *(2017.01)*

(52) Cooperative Patent Classification (CPC):
**H04N 1/628; G06T 7/90**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.03.2024 US 202463568956 P**
**19.12.2024 US 202418988506**

(71) Applicant: **INTEL Corporation**
**Santa Clara, CA 95054 (US)**

(72) Inventors:
• ZATZARINNI, Rony
  6382618 Tel Aviv (IL)
• BARBER, Dor
  4632821 Herzliya (IL)
• SEMENJATSHENCO, Andrey
  5348010 Givataim (IL)

(74) Representative: **HGF**
**HGF Limited**
**1 City Walk**
**Leeds LS11 9DX (GB)**

(54) **PERSONALIZED SKIN TONE ADAPTATION FOR IMAGES AND VIDEO**

(57) Systems, apparatus, articles of manufacture, and methods are disclosed to implement personalized skin tone adaptation for images and video. An example apparatus disclosed herein obtains an initial skin tone group distribution for an identified user depicted in an input image. The example apparatus also determines, based on the input image, a plurality of skin tone measurements associated respectfully with a plurality of skin tone groups corresponding to the initial skin tone group distribution. The example apparatus further outputs a revised skin tone group distribution based on the skin tone measurements, the initial skin tone group distribution, and a transition model.

**FIG. 1**

EP 4 622 245 A1

**Description**

RELATED APPLICATION

This patent claims the benefit of U.S. Provisional Patent Application No. 63/568,956, which was filed on March 22, 2024. U.S. Provisional Patent Application No. 63/568,956 is hereby incorporated herein by reference in its entirety. Priority to U.S. Provisional Patent Application No. 63/568,956 is hereby claimed.

BACKGROUND

In some applications, such as video conferencing, video creation, etc., image signal processors are used to process input images to generate visually pleasing output images. For example, an image signal processor may implement automatic exposure, white balance correction, color correction, etc., to enhance user experience in video conferencing where the person is the focus in the frame.

BRIEF DESCRIPTION OF THE DRAWINGS

FIG. 1 is a block diagram of an example environment in which example skin tone adaptation circuitry operates to improve image signal processor performance.

FIG. 2 is a block diagram of an example implementation of the skin tone adaptation circuitry of FIG. 1.

FIG. 3 is an example Monk skin tone scale.

FIG. 4 is a flowchart representative of example machine readable instructions and/or example operations that may be executed, instantiated, and/or performed by example programmable circuitry to implement the skin tone adaptation circuitry of FIG. 2.

FIG. 5 is a flowchart representative of example machine readable instructions and/or example operations that may be executed, instantiated, and/or performed by example programmable circuitry to implement likelihood determination circuitry included in the skin tone adaptation circuitry of FIG. 2

FIG. 6 is a block diagram of an example processing platform including programmable circuitry structured to execute, instantiate, and/or perform the example machine readable instructions and/or perform the example operations of FIGS. 4-5 to implement the skin tone adaptation circuitry 102 of FIG. 2.

FIG. 7 is a block diagram of an example implementation of the programmable circuitry of FIG. 6.

FIG. 8 is a block diagram of another example implementation of the programmable circuitry of FIG. 6.

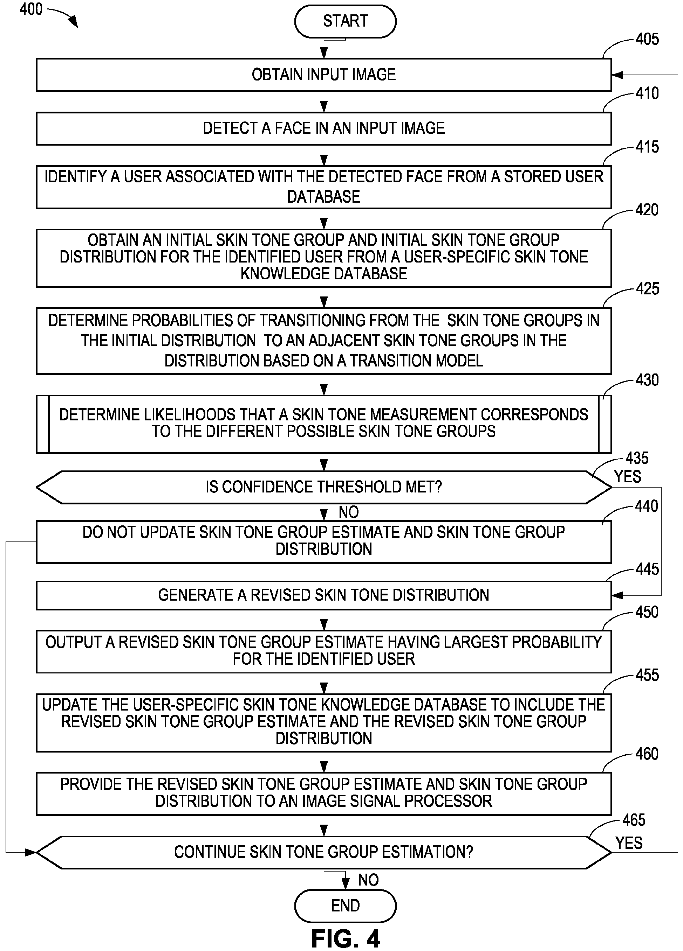

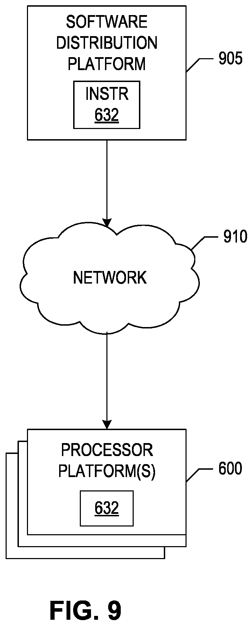

FIG. 9 is a block diagram of an example software/firmware/instructions distribution platform (e.g., one or more servers) to distribute software, instructions, and/or firmware (e.g., corresponding to the example machine readable instructions of FIGS. 4-5) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale.

DETAILED DESCRIPTION

There are many processing blocks implemented by image signal processors (ISPs) to generate visually pleasing images. Some example processing blocks include auto white balance (AWB), auto exposure (AE) and color correction (CC). AWB adjusts the color balance in an image to compensate for the different colors of light in different environments. AWB helps ensure that white/gray objects appear white/gray in the image, regardless of the type of lighting (e.g., daylight, fluorescent, incandescent, etc.) under which the photo was taken.

AE adjusts the amount of light captured by the camera sensor, ensuring that the image is neither too bright (overexposed) nor too dark (underexposed). AE does this by controlling the camera's aperture, shutter speed, and ISO settings based on the lighting conditions of the scene. If a human face appears in the frame, AE may give more emphasis on the correct exposure for the face since it is usually the focus area in the image.

CC transforms the image into a desired color palette. CC can be implemented by splitting the color space into groups of colors and applying a different color transformation, such as applying 3x3 conversion matrix, to each group.

Using an ISP to determine the proper exposure, white balance, and color correction in frame of video is useful for enhancing user experience in applications such as video conferencing in which a person is the focus in the frame because such tasks can enable accurate skin tone reproduction. These tasks are more straightforward in simple scenes, characterized by good lighting conditions and a variety of colored objects and gray color areas. However, in more challenging scenes, the performance of AE and AWB heavily relies on the skin tone of the individual in the frame. Once a face is recognized in the frame, prior knowledge can be utilized, as the tonal range of human skin is relatively narrow and falls within a specific range of the Monk Scale. The prior knowledge can help approximate the correct WB and select an appropriate AE setting. However, this approach has its limitations, as the exact color on the Monk Scale may be unable to be determined, especially in more challenging lighting conditions or complex scenes. Furthermore, AE and AWB may fail to accurately reproduce a person's skin tone under poor lighting conditions, such as back lit illumination scenes or scenes that lack color diversity.

For example, an image containing a simple scene of a person standing in front of a brown wall and holding a Macbeth chart with gray patches allows the AWB task to correctly estimate the person's skin tone. However, after the Macbeth chart is removed, the scene becomes challenging for the AWB task without the Macbeth chart, and the AWB task may select a cooler illumination thus reproducing incorrect colors and the incorrect skin tone for the person. As another example, in a scene with mixed illumination in which the illumination includes an office illumination and background illumination with outdoor illuminations, AWB may cause two people with different skin tones to have similar skin tone color reproductions.

In some implementations, after the ISP performs AE and AWB, CC is next operation performed. In some examples, CC is performed by color groups. However, the skin tones may be grouped together and transformed to an average skin tone without addressing the specific skin tone in the scene.

Methods and system disclosed herein learn the skin tone of a primary user(s) of a device and apply this information to enhance AWB, AE and skin tone reproduction. Example techniques disclosed herein utilize machine learning to determine a primary user's skin tone from scenes in which it is easier to determine the proper white balance and exposure. This acquired knowledge is then applied to enhance the accuracy of skin tone reproduction, white balance correction, and exposure control in more complex scenes in which the primary user is detected.

Acquiring the correct skin tone group for the primary user is beneficial for computing the accurate white balance in ambiguous scenes, selecting the optimal exposure for challenging scenes, etc. Furthermore, acquiring the correct skin tone group for the primary user enables accurate skin tone reproduction for the primary user while keeping the color reproduction pipe lightweight, because all the skin tones do not have to be reproduced.

Also, example techniques disclosed herein acquire the accurate skin tone of the primary user of the device and leverage it to improve the ISP performance. In some examples, one primary user is assumed for the device, but the examples disclosed herein can be expanded to include several primary users.

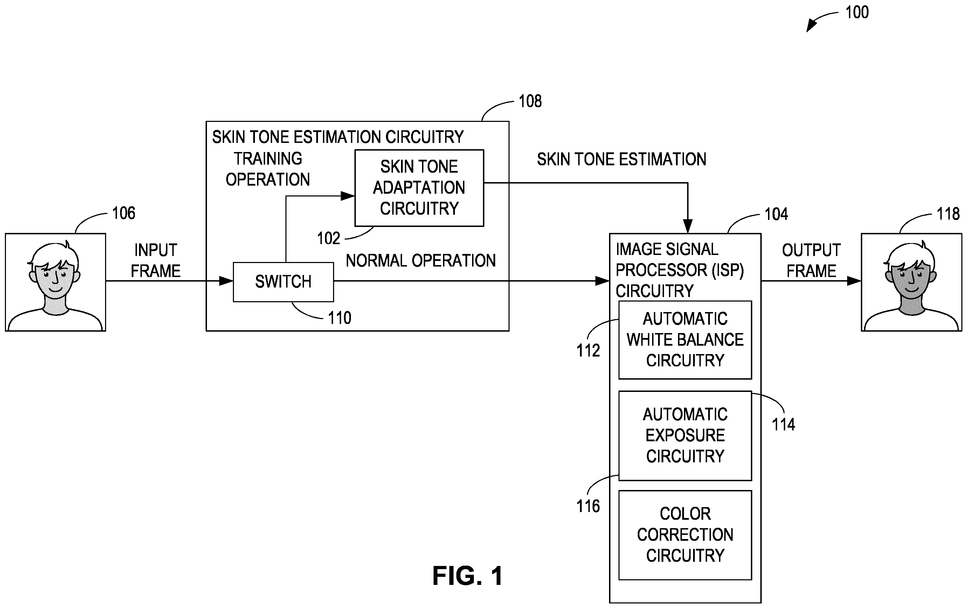

FIG. 1 is a block diagram of an example environment 100 in which example skin tone adaptation circuitry 102 operates in combination with example image signal processor (ISP) circuitry 104 to enable accurate skin tone reproduction in images and video. In the illustrated example, an example image or input frame 106 of a primary user is provided to example skin tone estimation circuitry 108. The skin tone estimation circuitry 108 includes the skin tone adaptation circuitry 102 and an example switch 110. In a normal operation phase, the switch 110 routes the input frame 106 to the ISP circuitry 104. In a training operation phase, the switch 110 routes the input frame 106 to the skin tone adaptation circuitry 102. The skin tone adaptation circuitry 102 detects the user's face in the input frame 106 and identifies the primary user. The skin tone adaptation circuitry 102 provides a skin tone estimate to the ISP circuitry 104.

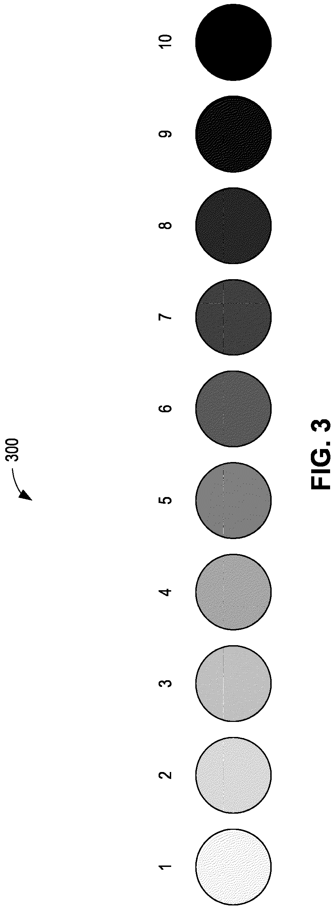

In some examples, a skin tone estimate is based on pre-defined skin tone groups. In examples disclosed herein a Monk Skin Tone Scale is used to define different skin tone groups as illustrated in FIG. 3. The Monk Skin Tone Scale includes ten groups numbered from 1 to 10. Each number represents a different gradient of skin tone with 1 being the lightest skin tone color to 10 being the darkest skin tone color. A chart is created that captures the skin tones under different illumination temperatures to characterize the skin tones in different conditions in the sensor (e.g., unprocessed) color space. Example illuminations temperatures are daylight 6500K, Inca 2600K and cool white 4000K. In some examples, other skin tone scales can be used to define the different skin tone groups.

The skin tone adaptation circuitry 102 selects the appropriate skin tone for the primary user. In some examples, the skin tone adaptation circuitry 102 prompts the primary user to provide a high-quality photograph of themselves alongside a skin tone chart. From the photograph, the skin tone adaptation circuitry 102 can infer the closest skin tone to the primary user from the chart and use it for the next operations. In some examples, the skin tone adaptation circuitry 102 prompts the user to provide a calibration image that contains a gray patch. In some examples disclosed herein, the skin tone adaptation circuitry 102 dynamically learn the skin tone. This approach adapts to gradual changes in skin tone over time, involving little to no effort from the user.

The ISP circuitry 104 receives a skin tone estimate from the skin tone adaptation circuitry 102. The ISP circuitry 104 includes example automatic white balance (AWB) circuitry 112, example automatic exposure (AE) circuitry 114, example color correction (CC) circuitry 116.

The AWB circuitry 112 aims to detect the correct illumination in the scene and determine the appropriate white balance coefficients. Scenes with limited information, such as those containing only a brown wall and a face, pose a challenge for the AWB circuitry 112. For example, it may be unclear from the image alone whether the scene contains a brown wall with cooler temperature illumination or a grayish wall with warmer temperature lighting. The face in the scene provides additional information, but this information is limited, as the exact skin tone group may be unable to be determined without knowing the illumination. Low light also presents a challenge due to quantization and noise. However, the ambiguity can be resolved by the example skin tone adaptation circuitry 102 disclosed herein, which incorporates the Monk Skin Tone group information, enabling accurate white balance detection and improved color reproduction.

The AE circuitry 114 implements an AE algorithm that attempts to determine the proper exposure for the current scene, thereby enhancing detail while ensuring a visually pleasing image. When there is a face in the image, there is an additional constraint on the AE circuitry 114 to make the face visible and clear. Different Monk Skin Tone groups have varying target luminance values for the face to achieve optimal exposure. For example, for a face in Monk Skin Tone group 8 (MST8), the AE algorithm attempts to select an exposure that brings the luminance of the face to the range [0.5,0.6], whereas for a face in MST3, the AE algorithm attempts to select an exposure that brings the luminance of the face to the range [0.75,0.85]. A problem may arise in extreme illumination conditions, where it becomes difficult to determine the correct MST. For example, an image with backlighting and glare can confuse the AE algorithm, causing the skin tone of an individual in MST3 to appear similar to that of a person in MST7. However, using the example skin tone adaptation circuitry 102 disclosed herein, the skin tone reproduction for MST3 is accurate. For example, the skin tone adaptation circuitry 102 is able to accurately detect the MST group for the primary user and provide this information to the AE circuitry 114, thereby enabling the AE circuitry 114 to determine the proper exposure for the primary user, resulting in a more appealing video.

The color correction circuitry 116 performs color correction. Some color correction techniques perform calibration by determining an average skin tone. However, such average calibration can introduce errors in skin tone reproduction. In contrast, the example skin tone adaptation circuitry 102 disclosed herein uses calibration tailored to the primary user. The correction may involve a specific affine transformation for each MST group.

Determining proper exposure and accurate white balance in the ISP circuitry 104 can be important for enhancing the user experience in video conferencing, where the person is the primary focus in the frame. These tasks may be relatively straightforward in simple scenes, characterized by good lighting and a variety of colored objects and neutral gray areas. However, in more challenging scenarios, the performance of the AE circuitry 114 and AWB circuitry 112 heavily depends on the skin tone of the individual in the frame. Some techniques can fail under extreme lighting conditions, such as backlit scenes or when there is a lack of color diversity. In contrast, the example skin tone adaptation circuitry 102 disclosed herein enables the ISP circuitry 104 to provide an output frame 118 with the correct skin tone for the primary user.

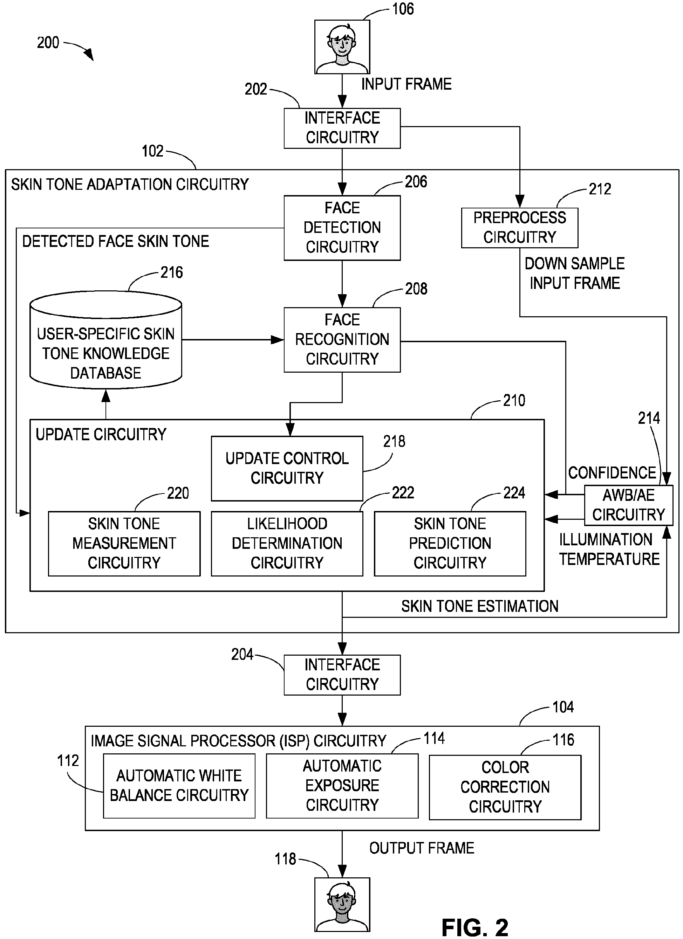

FIG. 2 is a block diagram of an example implementation 200 of the skin tone adaptation circuitry 102 of FIG. 1 operates to improve image signal processor performance. The skin tone adaptation circuitry 102 of FIG. 1 may be instantiated (e.g., creating an instance of, bring into being for any length of time, materialize, implement, etc.) by programmable circuitry such as a Central Processor Unit (CPU) executing first instructions. Additionally or alternatively, the skin tone adaptation circuitry 102 of FIG. 1 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 2 may, thus, be instantiated at the same or different times. Some or all of the circuitry of FIG. 2 may be instantiated, for example, in one or more threads executing concurrently on hardware and/or in series on hardware. Moreover, in some examples, some or all of the circuitry of FIG. 2 may be implemented by microprocessor circuitry executing instructions and/or FPGA circuitry performing operations to implement one or more virtual machines and/or containers.

In the example implementation 200, many of the structures of FIG. 2 are the same or similar to those present in FIG. 1. In the interest of brevity, those structures will not be described again here. Instead, the interested reader is referred to the above description of FIG. 1 for a full and complete description of those structures. To facilitate that process, like reference numbers are used for like structures in FIGS. 1 and 2.

Turning to FIG. 2, the skin tone adaptation circuitry 102 receives an input frame 106 via example first interface circuitry 202. The skin tone adaptation circuitry 102 provides a skin tone estimate via example second interface circuitry 204 to the ISP circuitry 104. The ISP circuitry 104 includes the AWB circuitry 112, the AE circuitry 114, and the color correction circuitry 116. The ISP circuitry 104 provides an output frame 118 with the appropriate skin tone color.

The skin tone adaptation circuitry 102 includes example face detection circuitry 206, example face recognition circuitry 208, example update circuitry 210, example preprocess circuitry 212, example AWB/AE circuitry 214, and an example user-specific skin tone knowledge database 216. The update circuitry 210 includes example update control circuitry 218, example skin tone measurement circuitry 220, example likelihood determination circuitry 222, and example skin tone prediction circuitry 224.

The example face detection circuitry 206 identifies the face in the input frame 106, while the frame recognition circuitry 208 identifies the primary user from a user-specific skin tone knowledge database 216. Face recognition can be relatively simple, as the number of different users for a personal device may be limited. Additionally, the frame recognition circuitry 208 may perform face recognition relatively infrequently, such as when a new face is detected by the face detector. The face recognition circuitry 208 obtains an initial skin tone group and initial skin tone group distribution for the identified user from the user-specific skin tone knowledge database 216. If the primary user was recognized, the update circuitry 210 updates the knowledge of their skin tone in the user-specific skin tone knowledge database 216. The update is calculated using a Bayesian framework, which refines the user's skin tone estimate as new measurements become available.

The update circuitry 210 includes example skin tone measurement circuitry 220 which determines skin tone measurements based on the input frame 106. The skin tone measurement circuitry 220 begins with a prior assumption about the person's skin tone group. In the absence of additional information, the skin tone measurement circuitry 220 can initialize a skin tone distribution for the identified person as a uniform distribution according to Equation 1.

$$P\left(G_t = i\right)$$

Equation 1.

where $G_t$ is the random variable representing the skin tone group at time t. The skin tone measurement circuitry 220 utilizes a transition model that describes the probability of moving from one skin tone group to another. This model assumes that the skin tone changes slowly over time. An example transition model is provided in Equation 2.

$$P(G_t = i | G_{t-1} = j) = \begin{cases} \delta \; if \; j = i \pm 1 \\ 1 - 2\delta \; if \; j = i \\ 0 \; otherwise \end{cases}$$

Equation 2.

Equation 2 defines the transition probability for a skin tone group $G_t$ at time t based on previous skin tone group $G_{t-1}$. The current skin tone group at time t is i. The previous skin tone group index at time t-1 is j. and $\delta$ is a small positive value representing a probability adjustment for transitions. If $j = i \pm 1$, the probability of transitioning to an adjacent skin tone group is $\delta$. This models the likelihood of a small, gradual change between adjacent skin tone groups. If $j = i$, the probability of staying in the same skin tone group is 1 - 2$\delta$. This captures a preference for remaining in the same skin tone group without frequent transitions. Otherwise, the probability of transition is 0. This means transitions between non-adjacent groups are not allowed.

The example likelihood determination circuitry 222 processes the skin tone measurements and determines the likelihood of getting a measurement $D_t$ (the distance for each group) given the skin tone group $G_t$. Measurement $D_t$ represents the measured skin tone data at time t (or a specific pixel in an image). $D_t$ is determined by analyzing red, green, blue pixel values of a skin tone at a specific pixel location. This likelihood can be modeled as a Gaussian distribution centered at zero (assuming that the distance is zero when the measurement matches the group), as provided in Equation 3. Note that the measurement $D_t$ is dependent on the illumination temperature and computed in the sensor color space.

$$P\left(D_t | G_t = i\right) = confidence \times NormalPDF\left(D_t; 0, \sigma_i\right)$$

Equation 3.

Equation 3 provides the likelihood function $P(D_t|G_t = i)$, which models the probability of observing the measured skin tone data $D_t$ given that the skin tone group at time t is i. $D_t$ provides the measured skin tone data at time t (e.g., the RGB value of a pixel). $G_t = i$ provides the condition that the skin tone group at time t is i. The confidence provides a scaling factor representing the likelihood determination circuitry 222 confidence in this likelihood model. The confidence adjusts the weight or trustworthiness of the computed probability. The Normal PDF ($D_t$ ; 0,$\sigma_i$) is the probability density function of a normal Gaussian distribution. The $\sigma_i$ value is the standard deviation for the skin tone group i, controlling the spread or variability of the observed or measured data around the mean. Equation 3 models the likelihood of observing the measured skin tone data $D_t$ based on the assumption that it follows a normal distribution centered at 0 with a standard deviation of $\sigma_i$ for the given skin tone group i. The "confidence" term scales this probability, reflecting how strongly the likelihood determination circuitry 222 trusts this likelihood estimation.

The example preprocess circuitry 212 down samples the input frame 106 and provides the down sampled input frame to the example AWB/AE circuitry 214. The AWB/AE circuitry 214 determines the illumination temperature and a confidence value of the skin tone group. The illumination temperature can be modeled as a normal probability density function (NormalPDF) of Equation 3, where the mean corresponds to the expected illumination temperature, and the

standard deviation $\sigma_i$ is derived from the variation in measurements within a specific skin tone group *i.* The $\sigma_i$ value is estimated based on small skin tone differences observed within each skin tone group.

The update control circuitry 218 determines if a confidence threshold is met. The confidence threshold represents a minimum level of certainty required by the system to proceed with updating its understanding of the skin tone group. Specifically, the update control circuitry 218 ensures that only reliable observations (e.g., when the measured data is likely strongly associated with a particular skin tone group) are used to adjust the system's internal estimates. If the confidence threshold is met the update control circuitry 218 determines a revised skin tone group distribution, or a new posterior distribution over the skin tone groups using Bayes' theorem and saves the new posterior distribution over the skin tone groups in the user-specific skin tone knowledge database 216. The posterior skin tone group distribution represents updated knowledge after obtaining the current measurement. In some examples, the update control circuitry 218 determines the posterior skin tone group distribution to be proportional to the product of the likelihood function and the sum of the product of the transition probabilities and the prior skin tone group distribution according to Equation 4.

$$P\left(G_t = i \mid D_t\right) \propto P\left(D_t \mid G_t = i\right) \times \sum_{j=1}^{10} P\left(G_t = i \mid G_{t-1} = j\right) \times P\left(G_{t-1} = j \mid D_{t-1}\right)$$

Equation 4.

**Equation** 4 defines the posterior probability of the skin tone group $G_t=i$ at time t given the measured data $D_t$, expressed using Bayesian inference. $P(D_t \mid G_t=i)$ is the likelihood of observing the data $D_t$ given that the skin tone group is i. This represents how well the observed data aligns with the expected distribution for that skin tone group. $P(G_t = i \mid G_{t-1}=j)$ is the transition probability of moving from a previous skin tone group j at time t-1 to the current group i at time t. This represents how likely transitions between skin tone groups are under the model's assumptions. $P(G_{t-1} = j \mid D_{t-1})$ is the posterior probability of being in group j at time t-1 given the data $D_{t-1}$ observed at time t-1. This represents the belief about the previous skin tone group based on past observations. Summation over j = 1, ...,10 integrates over all possible previous skin tone groups (from 1 to 10) at time t-1. This accounts for all possible prior states and their influence on the current posterior distribution. Equation 4 computes $P(Gt=i \mid D_t)$ by combining the likelihood of the current observation $D_t$ under each possible skin tone group i, the transition dynamics of how likely it is to transition from previous skin tone groups to the current group i and the belief about the prior state at t-1 from $D_{t-1}$, which gives the system context about the previous skin tone group. The summation over all previous skin tone groups provides a weighted context based on past information and transitions, allowing the system to smoothly transition between states over time in response to observed data.

The skin tone prediction circuitry 224 predicts, or estimates, the skin tone group for the identified user, which involves making a decision based on the updated or revised skin tone group distribution. In some examples, the skin tone prediction circuitry 224 chooses the skin tone group with the highest probability in the posterior skin tone group distribution as its skin tone prediction, or skin tone estimate, for the user. For example, the skin tone prediction circuitry 224 determines a revised skin tone group estimate based on a Bayesian probabilistic model as provided in Equation 5.

$$\widehat{G}_t = argmax_i P\left(G_t = i \mid D_t\right)$$

Equation 5.

Equation 5 represents the process of finding the most likely skin tone group I at time t given the observed data $D_t$. $P(Gt=i \mid D_t)$ is the posterior probability of the skin tone group i at time t given the observed data $D_t$. It represents the system's belief that the current skin tone corresponds to group i. The operator $argmax_i$ indicates selecting the value of i (the skin tone group) with the highest posterior probability. G represents the final chosen skin tone group (e.g., the skin tone group that is most probable given the data and model dynamics.

After the skin tone prediction circuitry 224 has made a prediction using the current measurement, the skin tone prediction circuitry 224 prepares the model for the next measurement. In some examples, the skin tone prediction circuitry 224 does this by setting its prior belief about the skin tone group for the next iteration to be equal to its current posterior belief. This is based on the assumption that a good estimate for the future state of the skin tone estimate is its current state, given the information that's available. For example, the skin tone prediction circuitry 224 initializes the skin tone group distribution for the next process iteration according to Equation 6.

$$P\left(G_{t+1}=i\right)=P\left(G_t=i\,|\,D_t\right)$$

Equation 6.

Equation 6 describes how the posterior probability at time t is used as the prior probability for the next time process (t+1). P ($G_{t+1}$=i) represents the prior probability of being in skin tone group i at time t+1 before observing new data. P ($G_t$=i | $D_t$ ) is the posterior probability of being in group i at time t given the observed data $D_t$. Equation 6 shows that the posterior probability at time t (P ($G_t$=i | $D_t$ )) becomes the prior probability for the next time operation (t+1). The skin tone measurement circuitry 220 observes data Dt at time t. The skin tone prediction circuitry 224 computes P ($G_t$=i | $D_t$ ), the updated belief about which skin tone group i the system is in. this posterior belief is then propagated forward in time as the prior belief for the next operation (t+1).

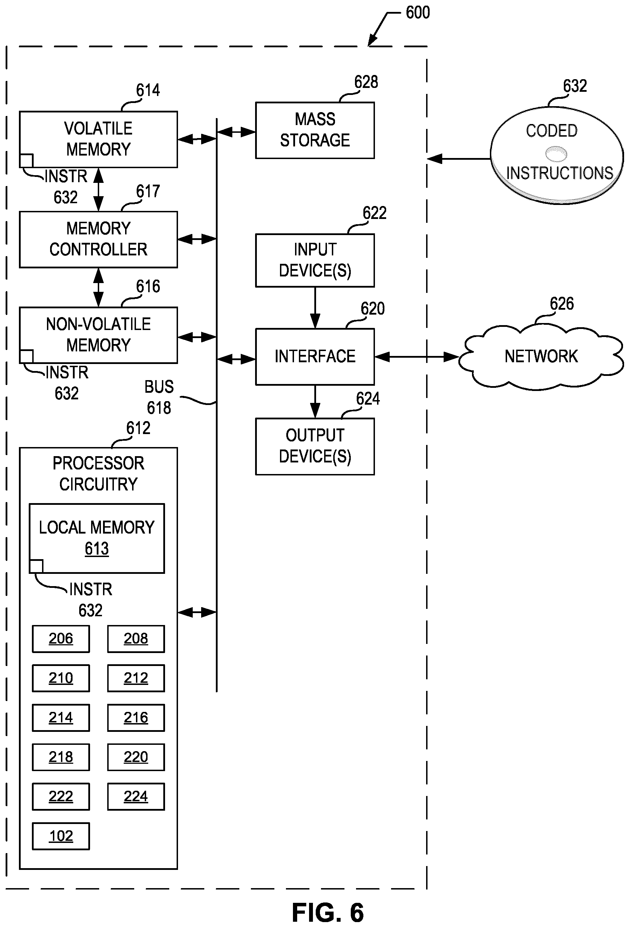

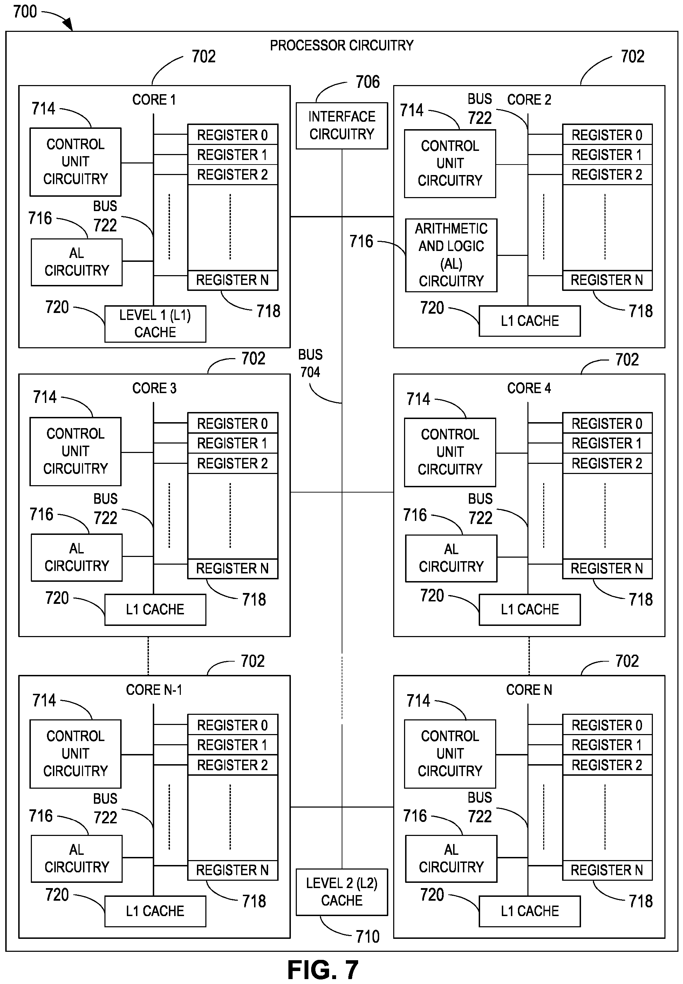

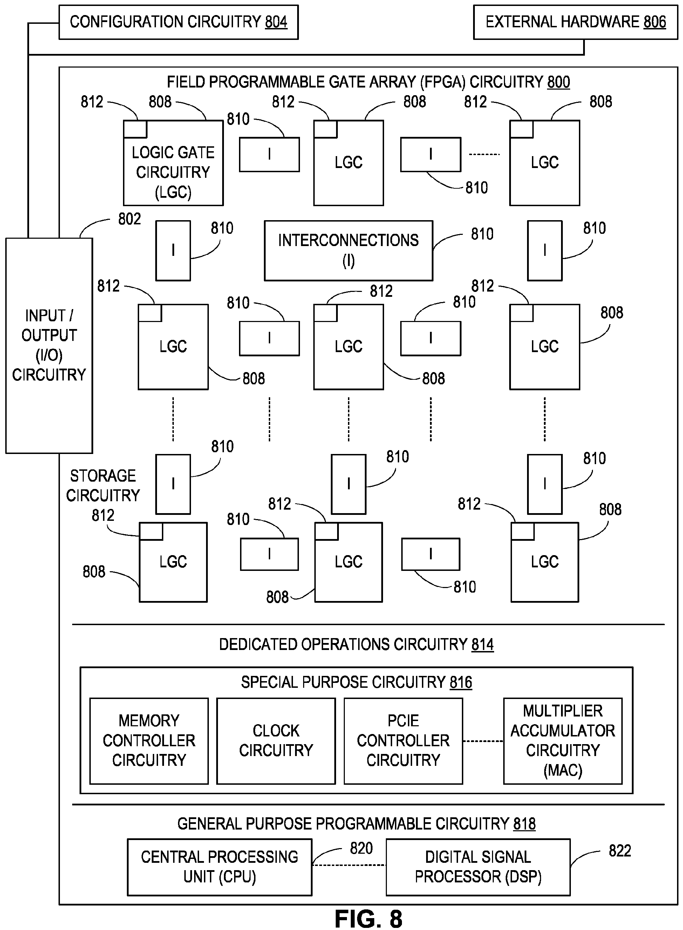

In some examples, the skin tone adaptation circuitry 102 includes means for obtaining an initial skin tone group distribution for an identified user depicted in the input image. For example, the means for obtaining an initial skin tone group distribution may be implemented by face recognition circuitry 208. In some examples, the face recognition circuitry 208 may be instantiated by programmable circuitry such as the example programmable circuitry 612 of FIG. 6. For instance, the face recognition circuitry 208 may be instantiated by the example microprocessor 700 of FIG. 7 executing machine executable instructions such as those implemented by at least blocks 415, 420 of FIG. 4. In some examples, the face recognition circuitry 208 may be instantiated by hardware logic circuitry, which may be implemented by an ASIC, XPU, or the FPGA circuitry 800 of FIG. 8 configured and/or structured to perform operations corresponding to the machine readable instructions. Additionally or alternatively, the face recognition circuitry 208 may be instantiated by any other combination of hardware, software, and/or firmware. For example, the face recognition circuitry 208 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the skin tone adaptation circuitry 102 includes means for determining a skin tone measurement and processing the skin tone measurement to determine a revised skin tone group distribution. For example, the means for determining may be implemented by skin tone measurement circuitry 220. In some examples, the skin tone measurement circuitry 220 may be instantiated by programmable circuitry such as the example programmable circuitry 612 of FIG. 6. For instance, the skin tone measurement circuitry 220 may be instantiated by the example microprocessor 700 of FIG. 7 executing machine executable instructions such as those implemented by at least blocks 425 of FIG. 4. In some examples, the skin tone measurement circuitry 220 may be instantiated by hardware logic circuitry, which may be implemented by an ASIC, XPU, or the FPGA circuitry 800 of FIG. 8 configured and/or structured to perform operations corresponding to the machine readable instructions. Additionally or alternatively, the skin tone measurement circuitry 220 may be instantiated by any other combination of hardware, software, and/or firmware. For example, the skin tone measurement circuitry 220 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the skin tone adaptation circuitry 102 includes means for outputting a revised skin tone group distribution based on the skin tone measurement. For example, the means for outputting may be implemented by update circuitry 210. In some examples, the update circuitry 210 may be instantiated by programmable circuitry such as the example programmable circuitry 612 of FIG. 6. For instance, the update circuitry 210 may be instantiated by the example microprocessor 700 of FIG. 7 executing machine executable instructions such as those implemented by at least blocks 460 of FIG. 4. In some examples, the update circuitry 210 may be instantiated by hardware logic circuitry, which may be implemented by an ASIC, XPU, or the FPGA circuitry 800 of FIG. 8 configured and/or structured to perform operations corresponding to the machine readable instructions. Additionally or alternatively, the update circuitry 210 may be instantiated by any other combination of hardware, software, and/or firmware. For example, the update circuitry 210 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the means for outputting includes means for outputting a skin tone group estimate based on the revised skin tone group distribution.

In some examples, the skin tone adaptation circuitry 102 includes means for determining likelihood of the skin tone measurement belonging to a skin tone group. For example, the means for determining likelihood may be implemented by likelihood determination circuitry 222. In some examples, the likelihood determination circuitry 222 may be instantiated by programmable circuitry such as the example programmable circuitry 612 of FIG. 6. For instance, the likelihood determination circuitry 222 may be instantiated by the example microprocessor 700 of FIG. 7 executing machine executable instructions such as those implemented by at least blocks 430, 435 of FIG. 4. In some examples, the likelihood determination circuitry 222 may be instantiated by hardware logic circuitry, which may be implemented by an ASIC, XPU, or the FPGA circuitry 800 of FIG. 8 configured and/or structured to perform operations corresponding to the machine readable instructions. Additionally or alternatively, the likelihood determination circuitry 222 may be instantiated by any other combination of hardware, software, and/or firmware. For example, the likelihood determination circuitry 222 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the means for determining likelihood includes means for evaluating the normal probability density function to determine an intermediate value, means for scaling the intermediate value by the confidence value to determine the likelihood.

In some examples, the skin tone adaptation circuitry 102 includes means for determining a skin tone group estimate. For example, the means for determining a skin tone group estimate may be implemented by skin tone prediction circuitry 224. In some examples, the skin tone prediction circuitry 224 may be instantiated by programmable circuitry such as the example programmable circuitry 612 of FIG. 6. For instance, the skin tone prediction circuitry 224 may be instantiated by the example microprocessor 700 of FIG. 7 executing machine executable instructions such as those implemented by at least blocks 445, 450 of FIG. 4. In some examples, the skin tone prediction circuitry 224 may be instantiated by hardware logic circuitry, which may be implemented by an ASIC, XPU, or the FPGA circuitry 800 of FIG. 8 configured and/or structured to perform operations corresponding to the machine readable instructions. Additionally or alternatively, the skin tone prediction circuitry 224 may be instantiated by any other combination of hardware, software, and/or firmware. For example, the skin tone prediction circuitry 224 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the skin tone adaptation circuitry 102 includes means for replacing the initial skin tone group distribution. For example, the means for replacing may be implemented by update control circuitry 218. In some examples, the update control circuitry 218 may be instantiated by programmable circuitry such as the example programmable circuitry 612 of FIG. 6. For instance, the update control circuitry 218 may be instantiated by the example microprocessor 700 of FIG. 7 executing machine executable instructions such as those implemented by at least blocks 455 of FIG. 4. In some examples, the update control circuitry 218 may be instantiated by hardware logic circuitry, which may be implemented by an ASIC, XPU, or the FPGA circuitry 800 of FIG. 8 configured and/or structured to perform operations corresponding to the machine readable instructions. Additionally or alternatively, the update control circuitry 218 may be instantiated by any other combination of hardware, software, and/or firmware. For example, the update control circuitry 218 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

While an example manner of implementing the skin tone adaptation circuitry 102 of FIG. 1 is illustrated in FIG. 2, one or more of the elements, processes, and/or devices illustrated in FIG. 2 may be combined, divided, re-arranged, omitted, eliminated, and/or implemented in any other way. Further, example face detection circuitry 206, example face recognition circuitry 208, example update circuitry 210, example preprocess circuitry 212, example AWB/AE circuitry 214, example user-specific skin tone knowledge database 216, example update control circuitry 218, example skin tone measurement circuitry 220, example likelihood determination circuitry 222, and example skin tone prediction circuitry 224, and/or, more generally, the example skin tone adaptation circuitry 102 of FIG. 2, may be implemented by hardware alone or by hardware in combination with software and/or firmware. Thus, for example, any of the example face detection circuitry 206, example face recognition circuitry 208, example update circuitry 210, example preprocess circuitry 212, example AWB/AE circuitry 214, example user-specific skin tone knowledge database 216, example update control circuitry 218, example skin tone measurement circuitry 220, example likelihood determination circuitry 222, and example skin tone prediction circuitry 224, and/or, more generally, the example skin tone adaptation circuitry 102, could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example skin tone adaptation circuitry 102 of FIG. 2 may include one or more elements, processes, and/or devices in addition to, or instead of, those illustrated in FIG. 2, and/or may include more than one of any or all of the illustrated elements, processes and devices.

Flowchart(s) representative of example machine readable instructions, which may be executed by programmable circuitry to implement and/or instantiate the skin tone adaptation circuitry 102 of FIG. 2 and/or representative of example operations which may be performed by programmable circuitry to implement and/or instantiate the skin tone adaptation circuitry 102 of FIG. 2, are shown in FIGS. 4-5. The machine readable instructions may be one or more executable programs or portion(s) of one or more executable programs for execution by programmable circuitry such as the programmable circuitry 612 shown in the example processor platform 600 discussed below in connection with FIG. 6 and/or may be one or more function(s) or portion(s) of functions to be performed by the example programmable circuitry (e.g., an FPGA) discussed below in connection with FIGS. 7 and/or 8. In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart(s) illustrated in FIGS. 4-5, many other methods of implementing the example skin tone adaptation circuitry 102 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 4-5 may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

FIG. 4 is a flowchart representative of example machine readable instructions and/or example operations 400 that may be executed, instantiated, and/or performed by programmable circuitry to provide a skin tone estimate for a user. The example machine-readable instructions and/or the example operations 400 of FIG. 4 begin at block 405, at which the first interface circuitry 202 (FIG. 2) obtains an input frame 106 (FIG. 2). The face detection circuitry 206 (FIG. 2) detects a face in the input frame 106 (block 410). The face recognition circuitry 208 (FIG. 2) identifies a user associated with the detected face from the user-specific skin tone knowledge database 216 (FIG. 2) (block 415). The face recognition circuitry 208 obtains an initial skin tone group and initial skin tone group distribution for the identified user from a user-specific skin tone knowledge database 216 (block 420). The skin tone measurement circuitry 220 (FIG. 2) determines probabilities of transitioning from the skin tone groups in the initial distribution to an adjacent skin tone groups in the distribution based on a transition model (block 425). The likelihood determination circuitry 222 determines likelihoods that a skin tone measurement corresponds to the different possible skin tone groups (block 430).

The likelihood determination circuitry 222 determines if a confidence threshold is met (block 435). If the confidence threshold is not met (block 435: NO), the update control circuitry 218 (FIG. 2) does not update the skin tone group estimate and does not update the skin tone group distribution (block 440). If the confidence threshold is met (block 435: YES), the skin tone prediction circuitry 224 (FIG. 2) generates a revised skin tone distribution for the user (block 445). The skin tone prediction circuitry 224 output a revised skin tone group estimate having the largest probability for the identified user (block 450). The update control circuitry 218 (FIG. 2) updates the user-specific skin tone knowledge database 216 to include the revised skin tone group estimate and the revised skin tone group distribution (block 455). The update circuitry 210 (FIG. 2) provides the revised skin tone group estimate and skin tone group distribution to an image signal processor circuitry 104 (FIG. 2) (block 460). The update control circuitry 218 determines whether to continue skin tone group estimation (block 465). If the update control circuitry 218 determines that a skin tone group estimation is to continue (block 465: YES), the first interface circuitry 202 obtains a second input image. If the update control circuitry 218 determines that a skin tone group estimation does not need to continue (block 465: NO), the example instructions and/or operations 400 of FIG. 4 end.

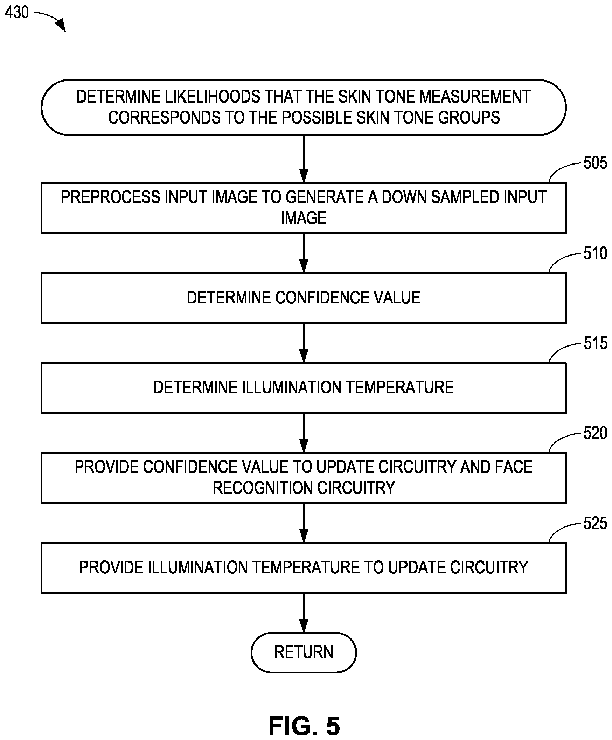

FIG. 5 is a flowchart representative of example machine readable instructions and/or example operations 500 that may be executed, instantiated, and/or performed by programmable circuitry to determine likelihoods that the skin tone measurement corresponds to the possible skin tone groups. The example machine-readable instructions and/or the example operations 500 of FIG. 5 begin at block 505, at which the preprocess circuitry 212 (FIG. 2) preprocess input image to generate a down sampled input image. The AWB/AE circuitry 214 (FIG. 2) determines a confidence value (block 510). The AWB/AE circuitry 214 determines an illumination temperature (block 515). The AWB/AE circuitry 214 provides the confidence value to update circuitry 210 (FIG. 2) and face recognition circuitry 208 (FIG. 2) (block 520). The AWB/AE circuitry 214 provides illumination temperature to update circuitry 210 (block 525). The example instructions and/or operations 430 of FIG. 5 return to block 435 of FIG. 4.

FIG. 6 is a block diagram of an example programmable circuitry platform 600 structured to execute and/or instantiate the example machine-readable instructions and/or the example operations of FIGS. 4-5 to implement the skin tone adaptation circuitry 102 of FIG. 2. The programmable circuitry platform 600 can be, for example, a server, a personal computer, a workstation, a self-learning machine (e.g., a neural network), a mobile device (e.g., a cell phone, a smart phone, a tablet such as an iPad™), a personal digital assistant (PDA), an Internet appliance, or any other type of computing and/or electronic device.

The programmable circuitry platform 600 of the illustrated example includes programmable circuitry 612. The programmable circuitry 612 of the illustrated example is hardware. For example, the programmable circuitry 612 can be implemented by one or more integrated circuits, logic circuits, FPGAs, microprocessors, CPUs, GPUs, DSPs, and/or microcontrollers from any desired family or manufacturer. The programmable circuitry 612 may be implemented by one or more semiconductor based (e.g., silicon based) devices. In this example, the programmable circuitry 612 implements example face detection circuitry 206, example face recognition circuitry 208, example update circuitry 210, example preprocess circuitry 212, example AWB/AE circuitry 214, example user-specific skin tone knowledge database 216, example update control circuitry 218, example skin tone measurement circuitry 220, example likelihood determination circuitry 222, and example skin tone prediction circuitry 224 and/or more generally the skin tone adaptation circuitry 102.

The programmable circuitry 612 of the illustrated example includes a local memory 613 (e.g., a cache, registers, etc.). The programmable circuitry 612 of the illustrated example is in communication with main memory 614, 616, which includes a volatile memory 614 and a non-volatile memory 616, by a bus 618. The volatile memory 614 may be implemented by Synchronous Dynamic Random Access Memory (SDRAM), Dynamic Random Access Memory (DRAM), RAMBUS® Dynamic Random Access Memory (RDRAM®), and/or any other type of RAM device. The non-volatile memory 616 may be implemented by flash memory and/or any other desired type of memory device. Access to the main memory 614, 616 of the illustrated example is controlled by a memory controller 617. In some examples, the memory controller 617 may be implemented by one or more integrated circuits, logic circuits, microcontrollers from any desired family or manufacturer, or any other type of circuitry to manage the flow of data going to and from the main memory 614, 616.

The programmable circuitry platform 600 of the illustrated example also includes interface circuitry 620. The interface circuitry 620 may be implemented by hardware in accordance with any type of interface standard, such as an Ethernet interface, a universal serial bus (USB) interface, a Bluetooth® interface, a near field communication (NFC) interface, a Peripheral Component Interconnect (PCI) interface, and/or a Peripheral Component Interconnect Express (PCIe) interface.

In the illustrated example, one or more input devices 622 are connected to the interface circuitry 620. The input device(s) 622 permit(s) a user (e.g., a human user, a machine user, etc.) to enter data and/or commands into the programmable circuitry 612. The input device(s) 622 can be implemented by, for example, an audio sensor, a microphone, a camera (still or video), a keyboard, a button, a mouse, a touchscreen, a trackpad, a trackball, an isopoint device, and/or a voice recognition system.

One or more output devices 624 are also connected to the interface circuitry 620 of the illustrated example. The output device(s) 624 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 620 of the illustrated example, thus, typically includes a graphics driver card, a graphics driver chip, and/or graphics processor circuitry such as a GPU.

The interface circuitry 620 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 626. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 600 of the illustrated example also includes one or more mass storage discs or devices 628 to store firmware, software, and/or data. Examples of such mass storage discs or devices 628 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine readable instructions 632, which may be implemented by the machine readable instructions of FIGS. 4-5, may be stored in the mass storage device 628, in the volatile memory 614, in the non-volatile memory 616, and/or on at least one non-transitory computer readable storage medium such as a CD or DVD which may be removable.

FIG. 7 is a block diagram of an example implementation of the programmable circuitry 612 of FIG. 6. In this example, the programmable circuitry 612 of FIG. 6 is implemented by a microprocessor 700. For example, the microprocessor 700 may be a general-purpose microprocessor (e.g., general-purpose microprocessor circuitry). The microprocessor 700 executes some or all of the machine-readable instructions of the flowcharts of FIGS. 4-5 to effectively instantiate the circuitry of FIG. 2 as logic circuits to perform operations corresponding to those machine readable instructions. In some such examples, the circuitry of FIG. 2 is instantiated by the hardware circuits of the microprocessor 700 in combination with the machine-readable instructions. For example, the microprocessor 700 may be implemented by multi-core hardware circuitry such as a CPU, a DSP, a GPU, an XPU, etc. Although it may include any number of example cores 702 (e.g., 1 core), the microprocessor 700 of this example is a multi-core semiconductor device including N cores. The cores 702 of the microprocessor 700 may operate independently or may cooperate to execute machine readable instructions. For example, machine code corresponding to a firmware program, an embedded software program, or a software program may be executed by one of the cores 702 or may be executed by multiple ones of the cores 702 at the same or different times. In some examples, the machine code corresponding to the firmware program, the embedded software program, or the software program is split into threads and executed in parallel by two or more of the cores 702. The software program may correspond to a portion or all of the machine readable instructions and/or operations represented by the flowcharts of FIGS. 4-5.

The cores 702 may communicate by a first example bus 704. In some examples, the first bus 704 may be implemented by a communication bus to effectuate communication associated with one(s) of the cores 702. For example, the first bus 704 may be implemented by at least one of an Inter-Integrated Circuit (I2C) bus, a Serial Peripheral Interface (SPI) bus, a PCI bus, or a PCIe bus. Additionally or alternatively, the first bus 704 may be implemented by any other type of computing or electrical bus. The cores 702 may obtain data, instructions, and/or signals from one or more external devices by example interface circuitry 706. The cores 702 may output data, instructions, and/or signals to the one or more external devices by the interface circuitry 706. Although the cores 702 of this example include example local memory 720 (e.g., Level 1 (L1) cache that may be split into an L1 data cache and an L1 instruction cache), the microprocessor 700 also includes example shared memory 710 that may be shared by the cores (e.g., Level 2 (L2 cache)) for high-speed access to data and/or instructions. Data and/or instructions may be transferred (e.g., shared) by writing to and/or reading from the shared memory 710. The local memory 720 of each of the cores 702 and the shared memory 710 may be part of a hierarchy of storage devices including multiple levels of cache memory and the main memory (e.g., the main memory 614, 616 of FIG. 6). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 702 may be referred to as a CPU, DSP, GPU, etc., or any other type of hardware circuitry. Each core 702 includes control unit circuitry 714, arithmetic and logic (AL) circuitry (sometimes referred to as an ALU) 716, a plurality of registers 718, the local memory 720, and a second example bus 722. Other structures may be present. For example, each core 702 may include vector unit circuitry, single instruction multiple data (SIMD) unit circuitry, load/store unit (LSU) circuitry, branch/jump unit circuitry, floating-point unit (FPU) circuitry, etc. The control unit circuitry 714 includes semiconductor-based circuits structured to control (e.g., coordinate) data movement within the corresponding core 702. The AL circuitry 716 includes semiconductor-based circuits structured to perform one or more mathematic and/or logic operations on the data within the corresponding core 702. The AL circuitry 716 of some examples performs integer based operations. In other examples, the AL circuitry 716 also performs floating-point operations. In yet other examples, the AL circuitry 716 may include first AL circuitry that performs integer-based operations and second AL circuitry that performs floating-point operations. In some examples, the AL circuitry 716 may be referred to as an Arithmetic Logic Unit (ALU).

The registers 718 are semiconductor-based structures to store data and/or instructions such as results of one or more of the operations performed by the AL circuitry 716 of the corresponding core 702. For example, the registers 718 may include vector register(s), SIMD register(s), general-purpose register(s), flag register(s), segment register(s), machine-specific register(s), instruction pointer register(s), control register(s), debug register(s), memory management register(s), machine check register(s), etc. The registers 718 may be arranged in a bank as shown in FIG. 7. Alternatively, the registers 718 may be organized in any other arrangement, format, or structure, such as by being distributed throughout the core 702 to shorten access time. The second bus 722 may be implemented by at least one of an I2C bus, a SPI bus, a PCI bus, or a PCIe bus.

Each core 702 and/or, more generally, the microprocessor 700 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 700 is a semiconductor device fabricated to include many transistors interconnected to implement the structures described above in one or more integrated circuits (ICs) contained in one or more packages.

The microprocessor 700 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 700, in the same chip package as the microprocessor 700 and/or in one or more separate packages from the microprocessor 700.

FIG. 8 is a block diagram of another example implementation of the programmable circuitry 612 of FIG. 6. In this example, the programmable circuitry 612 is implemented by FPGA circuitry 800. For example, the FPGA circuitry 800 may be implemented by an FPGA. The FPGA circuitry 800 can be used, for example, to perform operations that could otherwise be performed by the example microprocessor 700 of FIG. 7 executing corresponding machine readable instructions. However, once configured, the FPGA circuitry 800 instantiates the operations and/or functions corresponding to the machine readable instructions in hardware and, thus, can often execute the operations/functions faster than they could be performed by a general-purpose microprocessor executing the corresponding software.

More specifically, in contrast to the microprocessor 700 of FIG. 7 described above (which is a general purpose device that may be programmed to execute some or all of the machine readable instructions represented by the flowchart(s) of FIGS. 4-5 but whose interconnections and logic circuitry are fixed once fabricated), the FPGA circuitry 800 of the example of FIG. 8 includes interconnections and logic circuitry that may be configured, structured, programmed, and/or interconnected in different ways after fabrication to instantiate, for example, some or all of the operations/functions corresponding to the machine readable instructions represented by the flowchart(s) of FIGS. 4-5. In particular, the FPGA circuitry 800 may be thought of as an array of logic gates, interconnections, and switches. The switches can be programmed to change how the logic gates are interconnected by the interconnections, effectively forming one or more dedicated logic circuits (unless and until the FPGA circuitry 800 is reprogrammed). The configured logic circuits enable the logic gates to cooperate in different ways to perform different operations on data received by input circuitry. Those operations may correspond to some or all of the instructions (e.g., the software and/or firmware) represented by the flowchart(s) of FIGS. 4-5. As such, the FPGA circuitry 800 may be configured and/or structured to effectively instantiate some or all of the operations/functions corresponding to the machine readable instructions of the flowchart(s) of FIGS. 4-5 as dedicated logic circuits to perform the operations/functions corresponding to those software instructions in a dedicated manner analogous to an ASIC. Therefore, the FPGA circuitry 800 may perform the operations/functions corresponding to the some or all of the machine readable instructions of FIGS. 4-5 faster than the general-purpose microprocessor can execute the same.

In the example of FIG. 8, the FPGA circuitry 800 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 800 of FIG. 8 may access and/or load the binary file to cause the FPGA circuitry 800 of FIG. 8 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 800 of FIG. 8 to cause configuration and/or structuring of the FPGA circuitry 800 of FIG. 8, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 800 of FIG. 8 may access and/or load the binary file to cause the FPGA circuitry 800 of FIG. 8 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 800 of FIG. 8 to cause configuration and/or structuring of the FPGA circuitry 800 of FIG. 8, or portion(s) thereof.

The FPGA circuitry 800 of FIG. 8, includes example input/output (I/O) circuitry 802 to obtain and/or output data to/from example configuration circuitry 804 and/or external hardware 806. For example, the configuration circuitry 804 may be implemented by interface circuitry that may obtain a binary file, which may be implemented by a bit stream, data, and/or machine-readable instructions, to configure the FPGA circuitry 800, or portion(s) thereof. In some such examples, the configuration circuitry 804 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 806 may be implemented by external hardware circuitry. For example, the external hardware 806 may be implemented by the microprocessor 700 of FIG. 7.

The FPGA circuitry 800 also includes an array of example logic gate circuitry 808, a plurality of example configurable interconnections 810, and example storage circuitry 812. The logic gate circuitry 808 and the configurable interconnections 810 are configurable to instantiate one or more operations/functions that may correspond to at least some of the machine readable instructions of FIGS. 4-5 and/or other desired operations. The logic gate circuitry 808 shown in FIG. 8 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 808 to enable configuration of the electrical structures and/or the logic gates to form circuits to perform desired operations/functions. The logic gate circuitry 808 may include other electrical structures such as look-up tables (LUTs), registers (e.g., flip-flops or latches), multiplexers, etc.

The configurable interconnections 810 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 808 to program desired logic circuits.

The storage circuitry 812 of the illustrated example is structured to store result(s) of the one or more of the operations performed by corresponding logic gates. The storage circuitry 812 may be implemented by registers or the like. In the illustrated example, the storage circuitry 812 is distributed amongst the logic gate circuitry 808 to facilitate access and increase execution speed.

The example FPGA circuitry 800 of FIG. 8 also includes example dedicated operations circuitry 814. In this example, the dedicated operations circuitry 814 includes special purpose circuitry 816 that may be invoked to implement commonly used functions to avoid the need to program those functions in the field. Examples of such special purpose circuitry 816 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 800 may also include example general purpose programmable circuitry 818 such as an example CPU 820 and/or an example DSP 822. Other general purpose programmable circuitry 818 may additionally or alternatively be present such as a GPU, an XPU, etc., that can be programmed to perform other operations.

Although FIGS. 7 and 8 illustrate two example implementations of the programmable circuitry 612 of FIG. 6, many other approaches are contemplated. For example, FPGA circuitry may include an on-board CPU, such as one or more of the example CPU 820 of FIG. 7. Therefore, the programmable circuitry 612 of FIG. 6 may additionally be implemented by combining at least the example microprocessor 700 of FIG. 7 and the example FPGA circuitry 800 of FIG. 8. In some such hybrid examples, one or more cores 702 of FIG. 7 may execute a first portion of the machine readable instructions represented by the flowchart(s) of FIGS. 4-5 to perform first operation(s)/function(s), the FPGA circuitry 800 of FIG. 8 may be configured and/or structured to perform second operation(s)/function(s) corresponding to a second portion of the machine readable instructions represented by the flowcharts of FIG. 4-5, and/or an ASIC may be configured and/or structured to perform third operation(s)/function(s) corresponding to a third portion of the machine readable instructions represented by the flowcharts of FIGS. 4-5.

It should be understood that some or all of the circuitry of FIG. 2 may, thus, be instantiated at the same or different times. For example, same and/or different portion(s) of the microprocessor 700 of FIG. 7 may be programmed to execute portion(s) of machine-readable instructions at the same and/or different times. In some examples, same and/or different portion(s) of the FPGA circuitry 800 of FIG. 8 may be configured and/or structured to perform operations/functions corresponding to portion(s) of machine-readable instructions at the same and/or different times.

In some examples, some or all of the circuitry of FIG. 2 may be instantiated, for example, in one or more threads executing concurrently and/or in series. For example, the microprocessor 700 of FIG. 7 may execute machine readable instructions in one or more threads executing concurrently and/or in series. In some examples, the FPGA circuitry 800 of FIG. 8 may be configured and/or structured to carry out operations/functions concurrently and/or in series. Moreover, in some examples, some or all of the circuitry of FIG. 2 may be implemented within one or more virtual machines and/or containers executing on the microprocessor 700 of FIG. 7.

In some examples, the programmable circuitry 612 of FIG. 6 may be in one or more packages. For example, the microprocessor 700 of FIG. 7 and/or the FPGA circuitry 800 of FIG. 8 may be in one or more packages. In some examples, an XPU may be implemented by the programmable circuitry 612 of FIG. 6, which may be in one or more packages. For example, the XPU may include a CPU (e.g., the microprocessor 700 of FIG. 7, the CPU 820 of FIG. 8, etc.) in one package, a DSP (e.g., the DSP 822 of FIG. 8) in another package, a GPU in yet another package, and an FPGA (e.g., the FPGA circuitry 800 of FIG. 8) in still yet another package.

A block diagram illustrating an example software distribution platform 905 to distribute software such as the example machine readable instructions 632 of FIG. 6 to other hardware devices (e.g., hardware devices owned and/or operated by third parties from the owner and/or operator of the software distribution platform) is illustrated in FIG. 9. The example software distribution platform 905 may be implemented by any computer server, data facility, cloud service, etc., capable of storing and transmitting software to other computing devices. The third parties may be customers of the entity owning and/or operating the software distribution platform 905. For example, the entity that owns and/or operates the software distribution platform 905 may be a developer, a seller, and/or a licensor of software such as the example machine readable instructions 632 of FIG. 6. The third parties may be consumers, users, retailers, OEMs, etc., who purchase and/or license the software for use and/or re-sale and/or sub-licensing. In the illustrated example, the software distribution platform 905 includes one or more servers and one or more storage devices. The storage devices store the machine readable instructions 632, which may correspond to the example machine readable instructions of FIGS. 4-5, as described above. The one or more servers of the example software distribution platform 905 are in communication with an example network 910, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 632 from the software distribution platform 905. For example, the software, which may correspond to the example machine readable instructions of FIG. 4-5, may be downloaded to the example programmable circuitry platform 600, which is to execute the machine readable instructions 632 to implement the skin tone adaptation circuitry 102. In some examples, one or more servers of the software distribution platform 905 periodically offer, transmit, and/or force updates to the software (e.g., the example machine readable instructions 632 of FIG. 6) to ensure improvements, patches, updates, etc., are distributed and applied to the software at the end user devices. Although referred to as software above, the distributed "software" could alternatively be firmware.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified herein.

As used herein "substantially real time" refers to occurrence in a near instantaneous manner recognizing there may be real world delays for computing time, transmission, etc. Thus, unless otherwise specified, "substantially real time" refers to real time + 1 second.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example an integrated circuit may be implemented as one or more of an ASIC, an FPGA, a chip, a microchip, programmable circuitry, a semiconductor substrate coupling multiple circuit elements, a system on chip (SoC), etc.

From the foregoing, it will be appreciated that example systems, apparatus, articles of manufacture, and methods have been disclosed that provide a skin tone estimate to improve image signal processor performance . Disclosed systems, apparatus, articles of manufacture, and methods improve the efficiency of using a computing device by processing a skin tone measurement and an initial skin tone group distribution based on a Bayesian probability model to determine a revised skin tone group distribution. In some examples, the largest probability in the revised skin tone group distribution is selected to be the revised skin tone group estimate. Disclosed systems, apparatus, articles of manufacture, and methods are accordingly directed to one or more improvement(s) in the operation of a machine such as a computer or other electronic and/or mechanical device.

Further examples and combinations thereof include the following. Example 1 includes an apparatus comprising interface circuitry to obtain an input image, computer readable instructions, and at least one processor circuit to be programmed by the computer readable instructions to obtain an initial skin tone group distribution for an identified user depicted in the input image, determine, based on the input image, a plurality of skin tone measurements associated respectfully with a plurality of skin tone groups corresponding to the initial skin tone group distribution, and output a revised skin tone group distribution based on the skin tone measurements, the initial skin tone group distribution, and a transition model.

Example 2 includes the apparatus of example 1, wherein the initial skin tone group distribution is represented by a uniform probability distribution across the plurality of skin tone groups.

Example 3 includes the apparatus of examples 1 to 2, wherein one or more of the at least one processor circuit is to process the skin tone measurements and the initial skin tone group distribution based on a Bayesian probability model to determine the revised skin tone group distribution.

Example 4 includes the apparatus of any one of examples 1 to 3, wherein one or more of the at least one processor circuit is to determine a likelihood of the skin tone measurements belonging to a skin tone group based on a confidence value and a probability density function.

Example 5 includes the apparatus of example 4, wherein the probability density function is a normal probability density function parameterized for the skin tone group based on zero mean and a standard deviation of the skin tone group, and one or more of the at least one processor circuit is to evaluate the normal probability density function based on the skin tone measurements to determine an intermediate value, and scale the intermediate value by the confidence value to determine the likelihood.

Example 6 includes the apparatus of any one of example 1 to 5, wherein one or more of the at least one processor circuit is to output a skin tone group estimate for the identified user based on the revised skin tone group distribution.

Example 7 includes the apparatus of example 6, wherein one or more of the at least one processor circuit is to determine the skin tone group estimate to be one of the plurality of skin tone groups having a largest probability in the revised skin tone group distribution.

Example 8 includes the apparatus of any one of examples 1 to 7, wherein the transition model specifies a probability of transitioning from an initial skin tone group to an adjacent skin tone group.

Example 9 includes the apparatus of any one of examples 1 to 8, wherein one or more of the at least one processor circuit is to replace the initial skin tone group distribution with the revised skin tone group distribution for a second input image.

Example 10 includes the apparatus of any one of example 1 to 9, wherein the skin tone measurements are determined by analyzing red, green, blue pixel values of a skin tone at a specific pixel location

Example 11 includes a non-transitory machine readable medium comprising instructions to cause processor circuitry to obtain an initial skin tone group distribution for an identified user depicted in an input image, determine, based on the input image, a plurality of skin tone measurements associated respectfully with a plurality of skin tone groups corresponding to the initial skin tone group distribution, and output a revised skin tone group distribution based on the skin tone measurements, the initial skin tone group distribution, and a transition model.

Example 12 includes the non-transitory machine readable medium of example 11, wherein the initial skin tone group distribution is represented by a uniform probability distribution across the plurality of skin tone groups.

Example 13 includes the non-transitory machine readable medium of any one of example 11 to 12, wherein the instructions are to cause one or more of the processor circuitry to process the skin tone measurements and the initial skin tone group distribution based on a Bayesian probability model to determine the revised skin tone group distribution.

Example 14 includes the non-transitory machine readable medium of of any one of example 11 to 13, wherein the instructions are to cause one or more of the processor circuitry to determine a likelihood of the skin tone measurements belonging to a skin tone group based on a confidence value and a probability density function.

Example 15 includes the non-transitory machine readable medium of example 14, wherein the probability density function is a normal probability density function parameterized for the skin tone group based on zero mean and a standard deviation of the skin tone group, and the instructions are to cause one or more of the processor circuitry to evaluate the normal probability density function based on the skin tone measurements to determine an intermediate value, and scale the intermediate value by the confidence value to determine the likelihood.

Example 16 includes the non-transitory machine readable medium of any one of example 11 to 15, wherein the instructions are to cause one or more of the processor circuitry to output a skin tone group estimate for the identified user based on the revised skin tone group distribution.

Example 17 includes the non-transitory machine readable medium of example 16, wherein the instructions are to cause one or more of the processor circuitry to determine the skin tone group estimate to be one of the plurality of skin tone groups having a largest probability in the revised skin tone group distribution.

Example 18 includes the non-transitory machine readable medium of any one of example 11 to 17, wherein the transition model specifies a probability of transitioning from an initial skin tone group to an adjacent skin tone group.

Example 19 includes the non-transitory machine readable medium of any one of example 11 to 18, wherein the instructions are to cause one or more of the processor circuitry to replace the initial skin tone group distribution with the revised skin tone group distribution for a second input image.

Example 20 includes an apparatus comprising means for obtaining an initial skin tone group distribution for an identified user depicted in the input image, means for determining a plurality of skin tone measurements based on the input image, the skin tone measurements associated respectfully with a plurality of skin tone groups corresponding to the initial skin tone group distribution, and means for estimating a revised skin tone group distribution based on the skin tone measurements, the initial skin tone group distribution, and a transition model. The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

**Claims**

1.  An apparatus comprising:

    interface circuitry to obtain an input image;
    computer readable instructions; and
    at least one processor circuit to be programmed by the computer readable instructions to:

    obtain an initial skin tone group distribution for an identified user depicted in the input image;
    determine, based on the input image, a plurality of skin tone measurements associated respectfully with a plurality of skin tone groups corresponding to the initial skin tone group distribution; and
    output a revised skin tone group distribution based on the skin tone measurements, the initial skin tone group distribution, and a transition model.

2.  The apparatus of claim 1, wherein the initial skin tone group distribution is represented by a uniform probability distribution across the plurality of skin tone groups.

3.  The apparatus of claim 1 or claim 2, wherein one or more of the at least one processor circuit is to process the skin tone measurements and the initial skin tone group distribution based on a Bayesian probability model to determine the revised skin tone group distribution.

4.  The apparatus of any one of claims 1 to 3, wherein one or more of the at least one processor circuit is to determine a likelihood of the skin tone measurements belonging to a skin tone group based on a confidence value and a probability density function.

5.  The apparatus of claim 4, wherein the probability density function is a normal probability density function parameterized for the skin tone group based on zero mean and a standard deviation of the skin tone group, and one or more of the at least one processor circuit is to:

    evaluate the normal probability density function based on the skin tone measurements to determine an intermediate value; and
    scale the intermediate value by the confidence value to determine the likelihood.

6.  The apparatus of any one of claims 1 to 5, wherein one or more of the at least one processor circuit is to output a skin tone group estimate for the identified user based on the revised skin tone group distribution.

7.  The apparatus of claim 6, wherein one or more of the at least one processor circuit is to determine the skin tone group estimate to be one of the plurality of skin tone groups having a largest probability in the revised skin tone group distribution.

8.  The apparatus of any one of claims 1 to 7, wherein the transition model specifies a probability of transitioning from an initial skin tone group to an adjacent skin tone group.

9.  The apparatus of any one of claims 1 to 8, wherein one or more of the at least one processor circuit is to replace the initial skin tone group distribution with the revised skin tone group distribution for a second input image.

10. The apparatus of any one of claims 1 to 9, wherein the skin tone measurements are determined by analyzing red, green, blue pixel values of a skin tone at a specific pixel location.

11. A method comprising:

    obtaining an initial skin tone group distribution for an identified user depicted in an input image;
    determining, based on the input image, a plurality of skin tone measurements associated respectfully with a plurality of skin tone groups corresponding to the initial skin tone group distribution; and
    outputting a revised skin tone group distribution based on the skin tone measurements, the initial skin tone group distribution, and a transition model.

12. The method of claim 11, wherein the initial skin tone group distribution is represented by a uniform probability distribution across the plurality of skin tone groups.

13. The method of claim 11 or claim 12, including processing the skin tone measurements and the initial skin tone group distribution based on a Bayesian probability model to determine the revised skin tone group distribution.

14. The method of any one of claims 11 to 13, wherein the transition model specifies a probability of transitioning from an initial skin tone group to an adjacent skin tone group.

15. A machine readable medium comprising instructions to cause at least one processor circuit to perform the method of any one of claims 11 to 14.

**FIG. 1**

EP 4 622 245 A1

FIG. 2

FIG. 3

400

START

405

OBTAIN INPUT IMAGE

410

DETECT A FACE IN AN INPUT IMAGE

415

IDENTIFY A USER ASSOCIATED WITH THE DETECTED FACE FROM A STORED USER DATABASE

420

OBTAIN AN INITIAL SKIN TONE GROUP AND INITIAL SKIN TONE GROUP DISTRIBUTION FOR THE IDENTIFIED USER FROM A USER-SPECIFIC SKIN TONE KNOWLEDGE DATABASE

425

DETERMINE PROBABILITIES OF TRANSITIONING FROM THE SKIN TONE GROUPS IN THE INITIAL DISTRIBUTION TO AN ADJACENT SKIN TONE GROUPS IN THE DISTRIBUTION BASED ON A TRANSITION MODEL

430

DETERMINE LIKELIHOODS THAT A SKIN TONE MEASUREMENT CORRESPONDS TO THE DIFFERENT POSSIBLE SKIN TONE GROUPS

435

IS CONFIDENCE THRESHOLD MET?    YES

NO

440

DO NOT UPDATE SKIN TONE GROUP ESTIMATE AND SKIN TONE GROUP DISTRIBUTION

445

GENERATE A REVISED SKIN TONE DISTRIBUTION

450

OUTPUT A REVISED SKIN TONE GROUP ESTIMATE HAVING LARGEST PROBABILITY FOR THE IDENTIFIED USER

455

UPDATE THE USER-SPECIFIC SKIN TONE KNOWLEDGE DATABASE TO INCLUDE THE REVISED SKIN TONE GROUP ESTIMATE AND THE REVISED SKIN TONE GROUP DISTRIBUTION

460

PROVIDE THE REVISED SKIN TONE GROUP ESTIMATE AND SKIN TONE GROUP DISTRIBUTION TO AN IMAGE SIGNAL PROCESSOR

465

CONTINUE SKIN TONE GROUP ESTIMATION?    YES

NO

END

**FIG. 4**

430

DETERMINE LIKELIHOODS THAT THE SKIN TONE MEASUREMENT
CORRESPONDS TO THE POSSIBLE SKIN TONE GROUPS

505

PREPROCESS INPUT IMAGE TO GENERATE A DOWN SAMPLED INPUT
IMAGE

510

DETERMINE CONFIDENCE VALUE

515

DETERMINE ILLUMINATION TEMPERATURE

520

PROVIDE CONFIDENCE VALUE TO UPDATE CIRCUITRY AND FACE
RECOGNITION CIRCUITRY

525

PROVIDE ILLUMINATION TEMPERATURE TO UPDATE CIRCUITRY

RETURN

**FIG. 5**

FIG. 6

**FIG. 7**

**FIG. 8**

SOFTWARE
DISTRIBUTION
PLATFORM — 905

INSTR
632

NETWORK — 910

PROCESSOR
PLATFORM(S) — 600

632

**FIG. 9**

Europäisches
Patentamt

European
Patent Office

Office européen
des brevets

# EUROPEAN SEARCH REPORT

**Application Number**

EP 25 15 6309

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/142042 A1 (SETHI KARTIK [IN] ET AL) 13 May 2021 (2021-05-13) | 1-3,6-15 | INV. H04N1/62 G06T7/90 |
| Y | * abstract; figure all * * paragraphs [0036], [0042], [0082], [0085], [0081], [0083], [0023] * ----- | 4,5 | |
| Y | US 2004/218832 A1 (LUO JIEBO [US] ET AL) 4 November 2004 (2004-11-04) * abstract; figure all * * equation 4, 8; paragraphs [0037] - [0039], [0063] * ----- | 4,5 | |

|  | TECHNICAL FIELDS SEARCHED (IPC) |
|---|---|
|  | H04N G06T |

The present search report has been drawn up for all claims

| Place of search | Date of completion of the search | Examiner |
|---|---|---|
| The Hague | 18 June 2025 | Winne, Dominique |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.............................................................................

& : member of the same patent family, corresponding
document

## ANNEX TO THE EUROPEAN SEARCH REPORT
## ON EUROPEAN PATENT APPLICATION NO.

EP 25 15 6309

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2025

| Patent document cited in search report | Publication date | Patent family member(s) | | Publication date |
|---|---|---|---|---|
| US 2021142042 A1 | 13-05-2021 | US | 10936853 B1 | 02-03-2021 |
| | | US | 2021142042 A1 | 13-05-2021 |
| US 2004218832 A1 | 04-11-2004 | EP | 1618739 A1 | 25-01-2006 |
| | | JP | 2007534179 A | 22-11-2007 |
| | | US | 2004218832 A1 | 04-11-2004 |
| | | WO | 2004100531 A1 | 18-11-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63568956